# EUROPÄISCHE PATENTSCHRIFT

(11) **EP 1 930 760 B1**
(45) Veröffentlichungstag und Bekanntmachung des Hinweises auf die Patenterteilung: **19.11.2008**
(21) Anmeldenummer: 06025350.7
(22) Anmeldetag: 07.12.2006
(51) Int. Cl.: G02B 23/00

(54) **Kompaktes Fernrohr mit Umkehrprisma**
Compact telescope with image erecting prism
Télescope compact avec prisme redresseur d'image

(43) Veröffentlichungstag der Anmeldung: 11.06.2008
(60) Teilanmeldung: 08015556.7
(73) Patentinhaber: Swarovski-Optik KG, 6067 Absam i. Tirol (AT)
(72) Erfinder: Miller, Benno, 6020 Innsbruck (AT); Thaler, Wilfried, 6233 Kramsach (AT)
(74) Vertreter: Kador & Partner

(56) Entgegenhaltungen:
- EP-A- 0 727 685
- FR-A1- 2 672 701
- US-A- 2 456 521
- US-A- 3 531 177

## Beschreibung

Die Erfindung bezieht sich auf ein Fernrohr mit wenigstens einem Tubus mit einem Umkehrprisma und einer Fokussieroptik.

Während das Umkehrprisma in einem Fernrohr zur Bildumkehr vorgesehen ist, wird mit der Fokussieroptik die Einstellung der Bildschärfe bei unterschiedlicher Objektentfernung vorgenommen. Das Umkehrprisma ist im Allgemeinen mit einer Fassung versehen, um es im Tubus zu befestigen.
Demgegenüber ist die Fokussieroptik in einer Führung im Tubus mit einem Stellglied, wie einer Spindel oder Schubstange, verschiebbar, welche mit einem Betätigungselement, wie einem Drehknopf, betätigbar ist.

Da sowohl das Umkehrprisma wie die Fokussieroptik auf der optischen Achse des Objektivs liegen müssen, ist eine hohe Fertigungsgenauigkeit erforderlich, um einen genaue Ausrichtung von Umkehrprisma und Fokussieroptik zu erreichen. Durch die Führung der Fokussieroptik im Tubus wird der Fertigungsaufwand weiter erhöht. Auch erfordert die Führung der Fokussieroptik in dem Tubusgehäuse eine zylindrische Bohrung, wodurch die Designmöglichkeiten des Tubusgehäuses stark eingeschränkt werden.

Ein Fernrohr nach dem Oberbegriff des Anspruchs 1 ist aus EP-A-0727685 bekannt. Dabei ist das Umkehrprisma zusammen mit der Fokussieroptik in dem Innengehäuse vorgesehen. An dem als Lochscheibe ausgebildeten Abschnitt des Innengehäuses ist innen die Halterung für das Umkehrprisma und außen die Fassung mit der Rundoptik befestigt. Da die Halterung für das Umkehrprisma und die Fassung für die Rundoptik jeweils an der Lochscheibe montiert werden müssen, ist eine exakte Ausrichtung von Prisma, Fokussieroptik und Rundoptik mit einem erheblichen Aufwand verbunden.

Aufgabe der Erfindung ist es daher, bei hoher Genauigkeit der Ausrichtung von Umkehrprisma, Fokussieroptik und Rundoptik den Fertigungsaufwand wesentlich zu verringern.

Dies wird erfindungsgemäß mit dem in Anspruch 1 gekennzeichneten Fernrohr erreicht.

Die Halterung und das Innengehäuse sind einstückig ausgebildet, beispielsweise als Metall Dreh- oder Gussteil, um eine hohe Steifigkeit sicherzustellen.

Die Halterung wird durch wenigstens einen Steg gebildet sein, der an einer Seitenfläche des Umkehrprismas flächig anliegt. Der Steg kann dazu plattenförmig ausgebildet sein. Um das Umkehrprisma auf die Achse des Innenrohres auszurichten, sind vorzugsweise wenigstens zwei Stege vorgesehen, die an gegenüberliegenden Seiten des Umkehrprismas anliegen. Das Umkehrprisma kann an dem bzw. den Stegen beispielsweise durch Ankleben befestigt sein.

Die Halterung für das Umkehrprisma, also der bzw. die Stege, verbinden das Innenrohr mit der Fassung für die Rundoptik, die auf der von der Fokussieroptik abgewandten Seite des Umkehrprismas angeordnet ist. Die Rundoptik kann ein Okular- oder ein anderes Optikteil sein. Die Fassung für die Rundoptik ist vorzugsweise gleichfalls einstückig mit dem Innengehäuse ausgebildet.

An der Fassung für die Rundoptik liegt das Umkehrprisma vorzugsweise mit der einen Basisfläche an. Mit der anderen, dem Objektiv zugewandten Basisfläche liegt das Umkehrprisma vorzugsweise an einer Lochscheibe an, die mit dem Innengehäuse einstückig ausgebildet ist. An der Lochscheibe sind vorzugsweise auch der oder die Stege zur Befestigung des Umkehrprismas angeordnet.

Das Innengehäuse ist vorzugsweise mit einem Flansch versehen, mit dem es an der Innenseite des Tubusgehäuses befestigt wird. Der Flansch ist vorzugsweise im Bereich der Lochscheibe an dem Innengehäuse vorgesehen.

Das Umkehrprisma kann ein beliebiges Umkehrprisma sein, beispielsweise ein herkömmliches Umkehrprisma, wie ein Doppel-Porro- oder Abbe-König-Prisma, vorzugsweise wird ein Schmidt-Pechan-Prisma verwendet.

Wenn sich zwischen die einzelnen Prismen des Umkehrprismas, z. B. eines Schmidt-Pechan-Prismas eine Blende erstreckt, kann die Blende gleichfalls am Innengehäuse befestigt sein, beispielsweise dadurch, dass sie mit dem Innengehäuse ebenfalls einstückig ausgebildet ist.

Durch das im Tubusgehäuse befestigte Innengehäuse, das einerseits die Fokussieroptik und andererseits das Umkehrprisma aufnimmt, wird erfindungsgemäß eine hohe Genauigkeit der Ausrichtung von Umkehrprisma und Fokussieroptik bei geringem Fertigungsaufwand erreicht. Zudem kann das Tubusgehäuse unabhängig von dem Innengehäuse gestaltet werden, so dass sich mehr Designmöglichkeiten ergeben.

Zudem kann an der am Innengehäuse befestigten Halterung weitere Optik angebracht werden, beispielsweise die Fassung für die Rundoptik, wodurch die Fertigung zusätzlich rationalisiert wird.

Insgesamt entsteht damit erfindungsgemäß eine Baugruppe, die lediglich beispielsweise mit dem Flansch an dem Innengehäuse an einem Flansch oder dergleichen im Tubusgehäuse befestigt wird. Damit ergibt sich eine Kontrollmöglichkeit der gesamten Baugruppe vor dem Einbau in das Fernrohr. Auch kann diese Baugruppe in unterschiedlich gestalteten Tubus- bzw. Fernrohrgehäusen verwendet werden. Es versteht sich, dass das erfindungsgemäße Fernrohr sowohl als monokulares wie auch als binokulares Fernrohr ausgebildet sein kann.

Nachstehend ist eine Ausführungsform des erfindungsgemäßen Fernrohres anhand der Zeichnung beispielhaft näher erläutert. Darin zeigen:
Fig. 1 eine Draufsicht auf das Innengehäuse, die Umkehroptik und die Fassung für eine Rundoptik; und
Fig. 2 einen Schnitt entlang der Linie II-II in Fig.1, sowie eines Teils des Tubusgehäuses, an dem das Innengehäuse befestigt ist.

Danach weist das Fernrohr ein in einem Tubusgehäuse (1) befestigtes rohrförmiges Innengehäuse (2) mit einer Halterung (3) für ein Umkehrprisma (4) und eine Fassung (5) für eine Rundoptik auf.

In dem Innengehäuse 2 ist eine Fokussieroptik (6) in einer hülsenförmigen Fassung (7) in Längs- oder Axialrichtung gemäß dem Doppelpfeil (8) verschiebbar geführt. Dazu kann ein nichtdargestelltes Stellglied, beispielsweise eine Gewindespindel, eine Schubstange, ein Hebel oder dergleichen vorgesehen sein, welches an der verschiebbaren Fassung (7) in dem Innengehäuse (2) angreift. Zum Durchgriff des Stellgliedes durch das Innengehäuse (2) kann in dem Innengehäuse (2) ein nicht dargestellter Schlitz oder dergleichen vorgesehen sein. Das Stellglied kann beispielsweise durch einen außen am Fernrohr angebrachten Drehknopf oder dergleichen Betätigungselement betätigt werden.

Das als Rohr ausgebildete Innengehäuse (2), die Halterung (3) und die Fassung (5) für die Rundoptik sind vorzugsweise einstückig ausgebildet. Die Halterung (3) wird durch zwei plattenförmige Stege (9) und (10) gebildet, die an gegenüberliegenden Seiten (11, 12) des Umkehrprismas (4) angeordnet sind. Das Umkehrprisma (4) kann mit seinen Seitenflächen (11, 12) an den Stegen (9, 10) angeklebt sein.

An der Fassung (5) für die Rundoptik liegt das Prisma (4) mit der einen Basisfläche (13) an, während es sich mit seiner anderen Basisfläche (14) in Anlage an einer Lochscheibe (15) befindet, die koaxial an dem dem Umkehrprisma (4) zugewandten Ende des Innengehäuses (2) angeordnet und mit dem Innenrohr (2) einstückig ausgebildet ist.

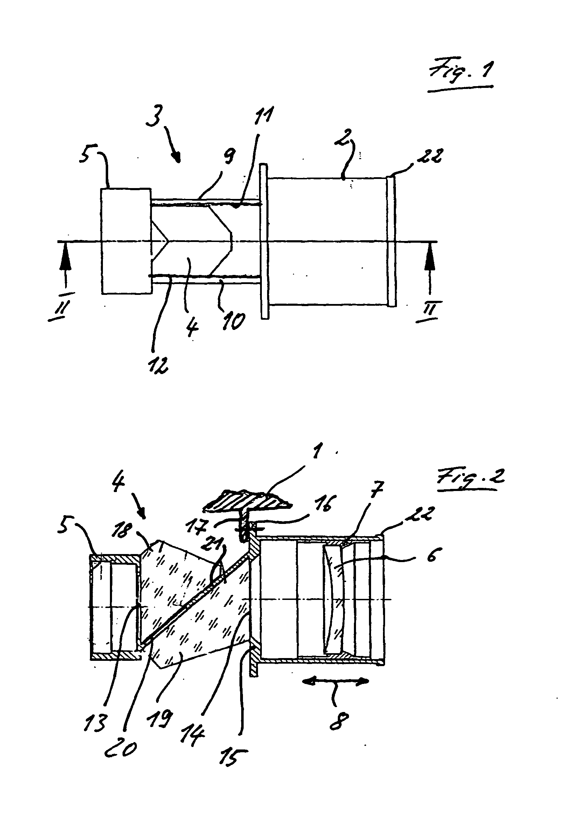

Gemäß Fig. 2 ist im Bereich der Lochscheibe ein sich vom Innengehäuse (2) nach außen erstreckender Flansch (16) einstückig am Innengehäuse (2) befestigt, um die Baueinheit aus Innengehäuse (2) mit Fokussieroptik (6), Halterung (3) mit Umlenkprisma (4) und Fassung (5) mit Rundoptik an einem Flansch (17) an der Innenseite des Tubusgehäuses (1) zu befestigen.

Das Umkehrprisma (4) ist als Schmidt-Pechan-Prisma ausgebildet. D.h. es weist zwischen den beiden Einzelprismen (18, 19) einen Luftspalt (20) und eine Blende (21) auf. Dabei ist die Blende (21) gleichfalls einstückig mit dem Lochscheibenabschnitt (15) des Innenrohres (2) verbunden. An dem Flansch (16) gegenüberliegenden Ende weist das Innengehäuse (1) einen Außenbund (22) zur Versteifung auf.

## Patentansprüche

1. Fernrohr mit wenigstens einem Tubusgehäuse (1) mit einem Umkehrprisma (4) und einer Fokussieroptik (6), die in Tubuslängsrichtung (8) verschiebbar geführt ist, einem im Tubusgehäuse (1) befestigten Innengehäuse (2) zur Führung der Fokussieroptik, einer Halterung (3) für das Umkehrprisma (4) mit wenigstens einem Steg (9, 10), der an einer Seite des Umkehrprismas (4) flächig anliegt und einer Rundoptik mit einer Fassung (5), **dadurch gekennzeichnet, dass** die Fassung (5) der Rundoptik und die Halterung (3) des Umkehrprismas (4) einstückig mit dem Innengehäuse (2) ausgebildet sind und der sich in Richtung des Okulars erstreckende Steg (9, 10) die Fassung (5) für die Rundoptik mit dem Innengehäuse (2) verbindet.

2. Fernrohr nach Anspruch 1, **dadurch gekennzeichnet, dass** das Innengehäuse (2) einen als Lochscheibe (15) ausgebildeten Abschnitt aufweist, an dem das Umkehrprisma (4) mit seiner dem Objektiv zugewandten Basisfläche (14) angeordnet ist.

3. Fernrohr nach Anspruch 2, **dadurch gekennzeichnet, dass** der als Lochscheibe (15) ausgebildete Gehäuseabschnitt einen nach außen ragenden Flansch (16) zur Befestigung des Innengehäuses (2) an dem Tubusgehäuse (1) aufweist.

4. Kernrohr nach Anspruch 2, **dadurch gekennzeichnet, dass** der Steg (9, 10) an der Lochscheibe (15) des Innengehäuses (2) angeordnet ist.

5. Fernrohr nach einem der vorstehenden Ansprüche, **dadurch gekennzeichnet, dass** das Umkehrprisma (4) wenigstens zwei Einzelprismen (18, 19) umfasst, zwischen die sich eine Blende (21) erstreckt, die an dem Innengehäuse (2) befestigt ist.

6. Fernrohr nach Anspruch 2 und 5, **dadurch gekennzeichnet, dass** die Blende an der Lochscheibe (15) des Innengehäuses (2) befestigt ist.

## Claims

1. A telescope having at least one tube housing (1) with a erecting prism (4) and a focusing optic (6) which is guided displaceably in the longitudinal direction (8) of the tube, an internal housing (2) fastened in the tube housing (1) for guiding the focusing optic, a holder (3) for the erecting prism (4) with at least one bar (9, 10) which lies planarly on one side of the erecting prism (4), and a circular optic with a mount (5), **characterized in that** the mount (5) of the circular optic and the holder (3) of the erecting prism (4) are configured in one piece with the internal housing (2), and the bar (9, 10) extending in the direction of the eyepiece connects the mount (5) for the circular optic with the internal housing (2).

2. The telescope according to claim 1, **characterized in that** the internal housing (2) has a portion configured as a perforated disk (15) on which the erecting prism (4) is disposed with its base surface (14) facing the objective.

3. The telescope according to claim 2, **characterized in that** the housing portion configured as a perforated disk (15) has an outwardly protruding flange (16) for fastening the internal housing (2) to the tube housing (1).

4. The telescope according to claim 2, **characterized in that** the bar (9, 10) is disposed on the perforated disk (15) of the internal housing (2).

5. The telescope according to any of the above claims, **characterized in that** the erecting prism (4) comprises at least two single prisms (18, 19) between which there extends a diaphragm (21) which is fastened to the internal housing (2).

6. The telescope according to claims 2 and 5, **characterized in that** the diaphragm is fastened to the perforated disk (15) of the internal housing (2).

## Revendications

1. Télescope avec au moins un boîtier de tube (1) avec un prisme de redressement (4) et une optique de focalisation (6) qui est guidée coulissante dans le sens de la longueur (8) du tube, avec un boîtier intérieur (2) fixé dans le boîtier de tube (1) pour guider l'optique de focalisation, une fixation (3) pour le prisme de redressement (4) avec au moins une languette (9, 10) qui s'applique à plat sur une face du prisme de redressement (4), et une optique circulaire avec une monture (5), **caractérisé en ce que** la monture (5) de l'optique circulaire et la fixation (3) du prisme de redressement (4) sont réalisées d'un seul tenant avec le boîtier intérieur (2), et la languette (9, 10), s'étendant dans la direction de l'oculaire, relie la monture (5) de l'optique circulaire au boîtier intérieur (2).

2. Télescope selon la revendication 1, **caractérisé en ce que** le boîtier intérieur (2) présente un segment réalisé sous la forme d'un disque perforé (15) sur lequel est disposé le prisme de redressement (4) avec sa surface de base (14) tournée vers l'objectif.

3. Télescope selon la revendication 2, **caractérisé en ce que** le segment de boîtier, réalisé sous la forme d'un disque perforé (15), présente une bride (16) faisant saillie vers l'extérieur pour la fixation du boîtier intérieur (2) sur le boîtier de tube (1).

4. Télescope selon la revendication 2, **caractérisé en ce que** la languette (9, 10) est disposée sur le disque perforé (15) du boîtier intérieur (2).

5. Télescope selon l'une quelconque des revendications 1 à 4, **caractérisé en ce que** le prisme de redressement (4) comprend au moins deux prismes individuels (18, 19) entre lesquels s'étend un diaphragme (21) qui est fixé sur le boîtier intérieur (2).

6. Télescope selon les revendications 2 et 5, **caractérisé en ce que** le diaphragme est fixé sur le disque perforé (15) du boîtier intérieur (2).
